(19) Europäisches Patentamt / European Patent Office / Office européen des brevets

(11) **EP 3 494 403 B1**

(12) **FASCICULE DE BREVET EUROPEEN**

(45) Date de publication et mention de la délivrance du brevet:
**13.05.2020 Bulletin 2020/20**

(21) Numéro de dépôt: **17748459.9**

(22) Date de dépôt: **01.08.2017**

(51) Int Cl.:
***G01S 5/02*** *(2010.01)*

(86) Numéro de dépôt international:
**PCT/EP2017/069482**

(87) Numéro de publication internationale:
**WO 2018/024750 (08.02.2018 Gazette 2018/06)**

(54) **PROCEDE ET SYSTEME DE GEOLOCALISATION PAR CALCUL DIRECT D'ELEMENTS DE DEPLACEMENT**

VERFAHREN UND SYSTEM ZUR GEOLOKALISIERUNG DURCH DIREKTE BERECHNUNG VON BEWEGUNGSELEMENTEN

METHOD AND SYSTEM OF GEOLOCATION BY DIRECT CALCULATION OF MOVEMENT ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2016 FR 1601190**

(43) Date de publication de la demande:
**12.06.2019 Bulletin 2019/24**

(73) Titulaire: **Thales**
**92400 Courbevoie (FR)**

(72) Inventeurs:
• **LEMER, Alain**
**92622 Gennevilliers Cedex (FR)**
• **YWANNE, Frédérique**
**92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A2- 1 617 601      WO-A1-03/107595**

• **XIAOPING WU ET AL: "Effective error control of iterative localization for wireless sensor networks", AEU - INTERNATIONAL JOURNAL OF ELECTRONICS AND COMMUNICATIONS, vol. 67, no. 5, 1 mai 2013 (2013-05-01), pages 397-405, XP055129940, ISSN: 1434-8411, DOI: 10.1016/j.aeue.2012.10.011**
• **OZIEL HERNANDEZ ET AL: "Maximum likelihood position estimation in ad-hoc networks using a dead reckoning approach", IEEE TRANSACTIONS ON WIRELESS COMMUNICATIONS, IEEE SERVICE CENTER, PISCATAWAY, NJ, US, vol. 7, no. 5, 1 mai 2008 (2008-05-01), pages 1572-1584, XP011215001, ISSN: 1536-1276**

**Description**

L'invention concerne un procédé et un système permettant la géolocalisation d'un ou de plusieurs objets à partir de mesures de distances obtenues par une fonction de mesure de distances inter-nœuds connue sous le terme anglo-saxon « ranging » et de positions d'ancres imprécises, par calcul direct d'éléments de déplacement. Le procédé permet ainsi de déterminer la position d'un objet sur une carte, sur un plan, dans un repère donné à l'aide de ses coordonnées géographiques, latitude/longitude ou autres coordonnées.

La détermination de la position d'un objet dont on connaît les distances à d'autres objets de positions connues est un sujet classique dans le domaine de la localisation. En général, on utilise des stations de détection dont la position est parfaitement connue ou « ancres ». Dans ce cas, l'incertitude du résultat de la position réside principalement dans la précision des mesures de distances appelées plus loin « ranging ».

Une autre approche possible consiste à déterminer le positionnement relatif des nœuds d'un réseau de stations, sur la seule base d'informations de distances relatives entre tout ou partie de ces nœuds. La connaissance précise d'un nombre limité d'informations a priori de positions sur certains nœuds permet alors de déterminer la position absolue de l'ensemble des nœuds du réseau. Cependant, plusieurs obstacles doivent être surmontés, par exemple:

- L'ensemble des mesures de distances entre les nœuds n'est pas forcément accessible, du fait de la portée des modules de ranging,
- Les mesures de distances sont nécessairement entachées d'erreurs rendant la résolution géométrique potentiellement surdéterminée,
- Les informations nécessaires au positionnement absolu peuvent être distribuées sur les coordonnées de plusieurs nœuds,
- Enfin, les informations nécessaires au positionnement absolu peuvent également être entachées d'erreurs, potentiellement plus importantes que celles associées au ranging.

Ce dernier point est particulièrement important en pratique, notamment en navigation collaborative. En effet, l'information de positionnement absolu de certains nœuds est souvent obtenue par des récepteurs du système de positionnement par satellite connu sous l'abréviation GNSS commerciaux (Global Navigation Satellite System), dont l'erreur de positionnement peut, dans des conditions de réception difficiles, largement excéder les erreurs de mesures de distance (ranging) entre nœuds. Ignorer cette situation peut alors conduire à des erreurs de positionnement des nœuds libres, voire à rejeter des mesures de ranging valides, mais incompatibles des distances calculées à partir des positions absolues supposées sans erreurs.

L'un des problèmes techniques posé est de trouver une solution efficace de calcul des positions de nœuds, afin qu'une métrique des écarts entre les mesures de ranging et les distances entre nœuds de la solution soit minimale et en prenant en compte l'incertitude associée aux erreurs de ranging et aux erreurs de positionnement absolu.

L'art antérieur décrit principalement deux approches pour traiter ce problème.

Une première approche consiste à reconstruire une géométrie relative des nœuds d'un réseau à partir d'informations de ranging et, éventuellement, d'informations angulaires entre nœuds, par exemple par goniométrie au sein d'un noeud. Ces méthodes sont généralement regroupées sous le terme de « localisation sans ancre » ou en anglo-saxon « Anchor Free Localization ». Dans cette approche, qui utilise uniquement les mesures de ranging, toutes les positions des nœuds sont libres, a priori, et les méthodes cherchent à ajuster celles-ci de telle sorte que l'erreur quadratique moyenne entre les distances calculées entre nœuds et les mesures de ranging soit minimale. De très nombreux algorithmes ont été proposés, du simple algorithme de type ressort de masse ou « mass-spring » à des techniques d'optimisation plus complexes, par exemple, la résolution des moindres carrés par Newton-Raphson, le filtrage particulaire, etc. L'essentiel des variantes de cette approche s'attache à éviter la convergence vers un minimum local sans toutefois le garantir.

Une deuxième approche vise à reconstruire la position absolue des nœuds du réseau à partir d'informations de ranging moyennant la connaissance a priori de la position de certains d'entre eux, appelés « ancres ». Il s'agit également de minimiser l'écart quadratique moyen entre la distance entre les positions des nœuds et les mesures de ranging, certaines positions étant a priori fixes et connues. Le problème est alors un problème de minimisation d'une fonction des coordonnées de nœuds libres, par exemple via un algorithme de type plus forte pente ou en anglo-saxon « steepest descent ». L'article « Anchor-Based Three-Dimensional Localization Using Range Measurements », Wang, Yue et al, illustre cette approche qui ne garantit cependant pas l'atteinte d'un optimum global. Des travaux plus théoriques proposent des méthodes d'optimisation globale.

Une troisième approche utilise des sources ou ancres externes de positions inconnues. Le problème est connu sous le terme « autocalibration » où l'on cherche à localiser conjointement des sources et les capteurs qui les détectent. Des différences de temps d'arrivée ou TDOA sont utilisées, ce qui donne une information moins riche qu'une mesure directe de ranging, assimilable à un temps d'arrivée ou TOA (abrégé anglo-saxon de « Time Of Arrivai ») et qui n'exploite pas d'informations a priori sur les positions des sources. L'article « Calibration-Free TDOA Self-Localization, Wendeberg Johannes et al, in Journal of Location Based Services, May 2013 » illustre une mise en œuvre possible de cette approche au travers de plusieurs algorithmes classiques (de type mass-spring, gradient descent, Gauss Newton...) ou plus spécifiques (algorithme de « Cone alignment »), ces algorithmes étant connus de l'homme du métier.

L'un des inconvénients de l'art antérieur est qu'il suppose :

- Soit que toutes les positions des capteurs sont libres, ne délivrant qu'une géométrie de l'ensemble des nœuds potentiellement précise, mais des coordonnées relatives des nœuds entre eux,
- Soit que la détermination de la position absolue des nœuds repose sur la connaissance externe de la position de certains d'entre eux dont l'exactitude est supposée parfaite.

A priori, l'art antérieur ne traite pas de l'intégration conjointe de l'incertitude sur la position des ancres et, de la possible remise en cause de ces positions.

L'article " Effective error control of iterative localization for wireless sensor networks" Wu, Xiaoping et al. décrit un procédé de control d'erreur pour prévenir des erreurs de propagation et d'accumulation dans un procédé de localisation en considérant les erreurs de position de nœuds et les erreurs de mesure.

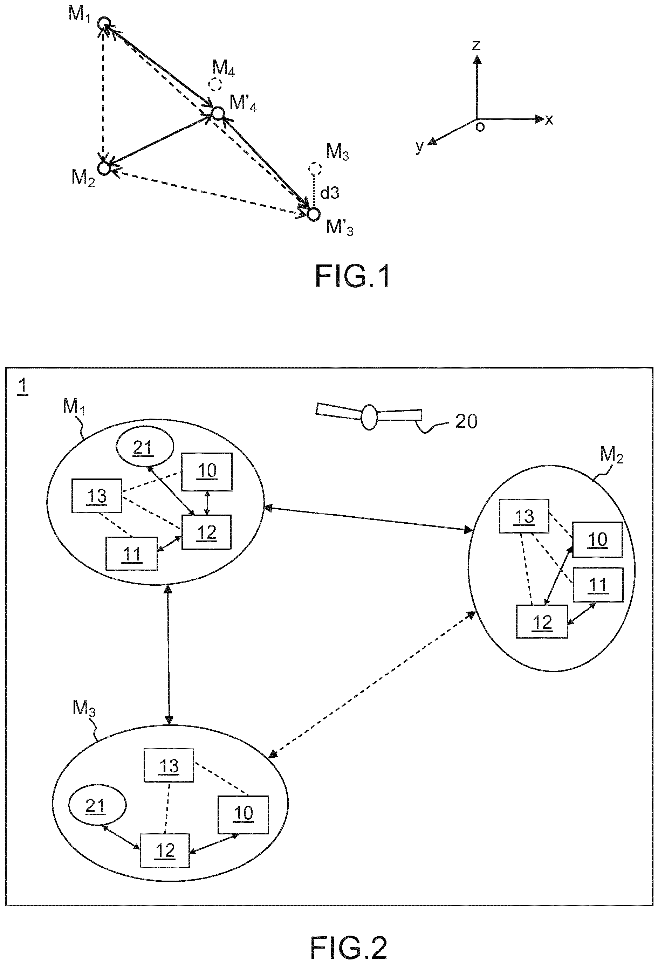

La figure 1 illustre les problèmes non résolus par l'art antérieur. Dans cet exemple, les coordonnées des ancres associées aux nœuds $M_1$ et $M_2$ sont supposées être accessibles de façon idéale, c'est-à-dire sans erreur, par exemple grâce à des relevés topographiques, alors que les coordonnées de l'ancre $M_3$ sont en pratique entachées d'une erreur d3, par exemple mesurée par un système GNSS, positionnant l'ancre $M_3$ au point M'$_3$. Une autre hypothèse de cette illustration est que la précision de ranging est parfaite, en pratique très inférieure à d3. Les mesures de ranging sont représentées par des flèches sur la figure 1. Les techniques de l'art antérieur estiment incorrectement la position du nœud libre en M'$_4$, la position réelle du nœud libre $M_4$ en distribuant les erreurs de ranging associées à ce nœud, ce qui aboutit à un minimum d'erreur quadratique moyenne résiduelle important. En outre, la position du nœud $M_3$ n'est pas remise en cause et reste erronée.

Le procédé selon l'invention va notamment exploiter l'ensemble des incertitudes des mesures de ranging et des positions des ancres, ce qui permet notamment de modifier la position des ancres, afin d'aboutir à une erreur quadratique minimale sur les mesures de ranging. Le résultat de la mise en œuvre du procédé selon l'invention permettra l'obtention précise de la position d'un objet dans un espace donné.

L'invention concerne un procédé pour déterminer la position d'un ou plusieurs objets susceptibles de se déplacer dans un réseau, chaque objet étant doté d'une capacité de mesure de distance aux autres nœuds du réseau, au moins une partie des coordonnées d'un objet étant connue, caractérisé en ce qu'il comporte au moins les étapes suivantes :

- Définir un ensemble de points Ai ou ancres et les incertitudes associées à leurs coordonnées, les coordonnées des ancres et l'incertitude sur les coordonnées décrivant des informations sur la position des objets et l'incertitude sur ces informations,
- Générer un ensemble contenant les positions estimées des objets et définir une position initiale des points,
- Mesurer un ensemble de distance entre au moins deux objets Mi, Mj, avec des incertitudes associées, et exécuter les étapes suivantes :

$$\vec{\delta}_{\to i} = \sum_{j \in R_i} \vec{\delta}_{j \to i}$$

- Etape 1, pour chaque objet $M_i$, calculer un déplacement correspondant à la somme vectorielle des déplacements de mesure ou ranging sur l'ensemble de mesures de ranging disponibles vers l'objet $M_i$ et induits sur cet objet $M_i$ par la totalité des autres objets disposant d'une mesure de ranging à partir dudit objet $M_i$, dus à la mesure de ranging $r_{ij}$ relative entre $M_i$ et $M_j$ et à son incertitude $\sigma_{rij}$, avec $R_i = \{r_{ij}\}$ l'ensemble des mesures de ranging

$$\vec{\delta}_{\to i} = \sum_{j \in R_i} \vec{\delta}_{j \to i} \qquad \vec{\delta}_{j \to i} = \varphi(\Delta_{ij}, \sigma_{rij}) \frac{\overrightarrow{M_j M_i}}{\left\| \overrightarrow{M_j M_i} \right\|}$$

disponibles vers $M_i$, et où avec $\Delta_{ij}$ les coordonnées de $M_jM_i$, $\varphi$ est une fonction de déplacement donnée,

- Etape 2, pour chaque objet $M_i$, possédant une coordonnée d'ancrage dans une ancre virtuelle associée $A_i$, calculer une valeur de déplacement de rappel $\vec{\alpha}_{\to i}$ vers cette ancre avec $\vec{\alpha}_{\to i} = \Psi(\overrightarrow{A_i M_i} + \vec{\delta}_{\to i}, \vec{\sigma_{Ai}})$, $\Psi$ une fonction de déplacement,
- Etape 3, à chaque objet $M_i$ appliquer un déplacement égal à la somme du déplacement de ranging $\vec{\delta}_{\to i}$ et de la correction d'ancrage $\vec{\alpha}_{\to i}$ précédemment calculés, $\overrightarrow{OM_i}(l+1) = \overrightarrow{OM_i}(l) + \vec{\delta}_{\to i} + \vec{\alpha}_{\to i}$,

- Etape 4, calculer le carré du terme d'erreur $\Delta_{tot}^2 = \sum_{i=0}^{N-1} \Delta_i^2$ où $\Delta_i^2 = \sum_{j \neq i} \Delta_{ij}^2$ avec $\Delta_{ij} = r_{ij} - d(M_i, M_j)$, $\Delta$ est un terme d'erreur entre une estimation de la distance d(Mi, Mj) après déplacement de l'objet à l'étape 3 et la mesure de distance $r_{ij}$ fournie par des dispositifs de ranging sur l'ensemble des nœuds, comparer cette quantité à un critère d'arrêt défini au préalable par un opérateur, si $\Delta_{tot}^2 \leq \Delta_{fin}^2$, ou bien max($|\Delta_{ij}|$) < *écartMax*, si ce test est respecté, aller à l'étape 6,

- Sinon, Etape 5, tester si un nombre maximal d'itérations est atteint, Si $l < l_{max}$ alors itérer $l = l + 1$ et aller à l'étape 1, sinon aller à l'étape 6,

- Etape 6, fin des itérations, définir la position des objets correspondant à la meilleure estimation de la position réelle des objets obtenue pour chaque objet.

Les coordonnées peuvent être obtenues par un moyen externe de géolocalisation dont la précision est connue.

Une ancre et son vecteur d'incertitude sont, par exemple, définis de la manière suivante :

- Si une mesure externe $m_i^k$ est supposée connue, par un dispositif de géolocalisation, tel que par exemple un capteur GNSS ou un relevé topographique, sur la coordonnée k de l'objet $M_i$ avec une incertitude $\sigma_{Ai}^k$, alors la k$^{ième}$ coordonnée de l'ancre $A_i$ est égale à $m_i^k$ et la k$^{ième}$ coordonnée du vecteur d'incertitude $\overrightarrow{\sigma_{Ai}}$ est égale à $\sigma_{Ai}^k$,

- Dans le cas contraire, la k$^{ième}$ coordonnée de l'ancre $A_i$ est fixée à une valeur arbitraire (par exemple, 0) et la k$^{ième}$ coordonnée du vecteur incertitude $\overrightarrow{\sigma_{Ai}}$ est fixée à une valeur arbitraire négative.

Il est possible d'utiliser une fonction de déplacement proportionnelle à une fonction intermédiaire définie de la manière suivante :

$$f(\varepsilon, \sigma) = \begin{vmatrix} 1 - e^{-\frac{\varepsilon^2}{2\sigma^2}}, \text{ si } \sigma > 0 \text{ (coordonnée ancrée)} \\ 1, \text{ si } \sigma = 0 \text{ (coordonnée ancrée fixe)} \\ 0, \text{ si } \sigma < 0 \text{ (coordonnée libre)} \end{vmatrix}$$

où $\varepsilon$ représente l'écart à la position d'équilibre.

Selon une autre variante de réalisation, on utilise une fonction de déplacement proportionnelle à une fonction intermédiaire définie de la manière suivante :

$$f(\varepsilon, \sigma) = \begin{vmatrix} \beta, \text{ où } \beta \in [0,1[, \text{ si } \sigma > 0 \text{ (coordonnée ancrée)} \\ 1, \text{ si } \sigma = 0 \text{ (coordonnée ancrée fixe)} \\ 0, \text{ si } \sigma < 0 \text{ (coordonnée libre)} \end{vmatrix}$$

Un coefficient de convergence utilisé pour la fonction de déplacement est, par exemple, un paramètre de convergence compris entre 0 et 0.5.

Les coordonnées des ancres $A_i$ sont, par exemple, définies de la manière suivante :

- égales à des mesures connues a priori avec une incertitude positive ou nulle (celle-ci est reportée dans la coordonnée correspondante du vecteur $\overrightarrow{\sigma_{Ai}}$), les coordonnées sont des coordonnées d'ancrage,

- en l'absence de mesures, la coordonnée correspondante sera inutilisée, les coordonnées sont libres.

Selon une variante de réalisation, on définit une position initiale des points $\{M_i(0)\}_{i=0..N-1}$, de la manière suivante :

- de façon arbitraire déterministe,
- de manière aléatoire, par tirage au sort des valeurs des coordonnées des nœuds,
- en utilisant les positions estimées résultantes d'une application précédente du procédé,

- en utilisant la solution de méthodes de résolution sous-optimale telles que la pseudo-linéarisation (PSL),
- en utilisant des données d'ancrage disponibles pour $A_i$, ces coordonnées sont préférentiellement utilisées pour les coordonnées initiales correspondantes de $M_i$.

Pour la mise en œuvre du procédé, il est possible de désigner un objet comme maître adapté à exécuter les étapes du procédé selon l'invention.

Selon une autre variante de réalisation, chaque objet est adapté à exécuter les étapes du procédé selon l'invention.

L'objet dont la position est recherchée est, par exemple, un nœud dans un réseau de communication.

L'invention concerne aussi un dispositif permettant de déterminer la position d'un ou plusieurs objets susceptibles de se déplacer dans un réseau, un objet étant doté d'un dispositif de mesures de distance inter-nœuds et d'un moyen de communication avec les autres nœuds,les nœuds communiquant entre eux par liaison radiofréquence, caractérisé en ce qu'il comporte au moins un processeur adapté à exécuter les étapes du procédé selon l'invention et un dispositif de mesure de la position des nœuds

D'autres caractéristiques et avantages de la présente invention apparaîtront mieux à la lecture de la description qui suit, d'exemples de réalisation, annexée des figures qui représentent :

- Figure 1, une illustration des problèmes de l'art antérieur,
- Figure 2, un schéma d'un réseau de communication,
- Figure 3, un organigramme avec les étapes principales du procédé selon l'invention, et
- Figures 4, 5, 6 et 7, une illustration des étapes du procédé selon l'invention.

Afin de mieux faire comprendre le procédé selon l'invention, l'exemple qui suit est donné dans le cas d'un système de communication 1 comprenant plusieurs nœuds Mi. Chaque nœud Mi ($M_1$, $M_2$, $M_3$) comporte, par exemple, un moyen de communication 10, un processeur 12 adapté à exécuter les étapes du procédé selon l'invention et une batterie 13 ou dispositif d'alimentation. Les nœuds Mi communiquent entre eux, par exemple, par une liaison radiofréquence, sans fil ou par d'autres moyens connus de l'homme du métier.

Le système comporte aussi un dispositif pour déterminer la position absolue de tout ou partie des noeuds. Ainsi, tout ou partie des nœuds peuvent par exemple être équipés d'un récepteur 11 qui, couplé avec un dispositif satellitaire 20, permet au nœud équipé du récepteur 11 de se géolocaliser. Ce dispositif peut être un système de géolocalisation GPS (Global Positioning System), un système GNSS (Global Navigation Satellite System), un moyen de topographie, etc. Sur la figure 2, le nœud $M_2$ est équipé d'un récepteur, alors que le nœud $M_3$ ne l'est pas.

Il comporte aussi un dispositif de mesures de distance ou dispositif de ranging 21 colocalisé par exemple sur un nœud Mi ou sur chacun des nœuds Mi du système. Par exemple, le dispositif peut se présenter sous la forme d'une carte électronique portée par le nœud. Selon une autre variante de réalisation, ce pourrait être une fonctionnalité du système de communication au niveau d'un nœud mesurant le temps mis par l'onde radio pour transiter entre les nœuds.

Dans ce réseau, pour la mise en œuvre du procédé, certains de ces nœuds seront de position connue et assimilés à des ancres.

Dans le procédé selon l'invention, le principe consiste notamment à assimiler l'ensemble des nœuds du réseau à un corps élastiquement déformable, les nœuds étant reliés entre eux par des ressorts virtuels dont la distance à la position d'équilibre est définie :

- Par la différence entre leur inter-distance euclidienne, et
- Par une mesure de ranging obtenue grâce à un dispositif externe.

Le procédé va calculer explicitement les déplacements des nœuds compatibles des incertitudes sur la distance entre nœuds (les mesures de ranging) et celles sur la position absolue de nœuds supposés connus ou ancres.

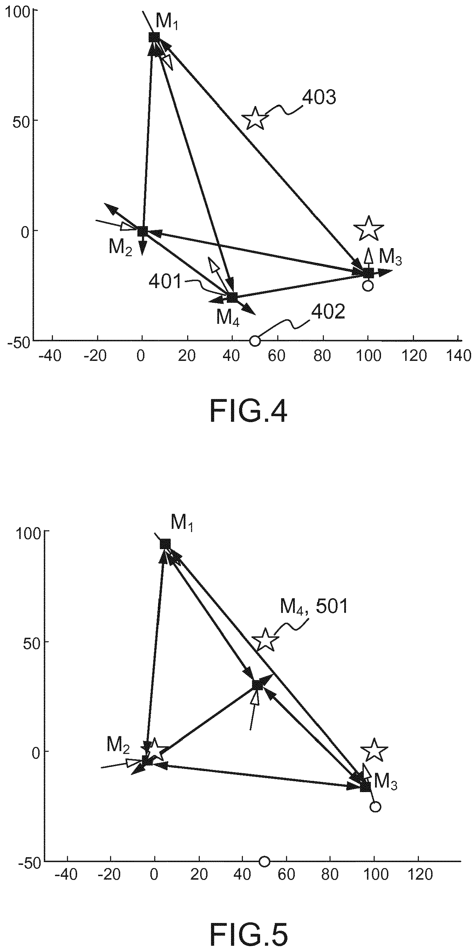

Les figures 5 à 7, détaillées plus loin dans la description, illustrent le déplacement itératif des nœuds d'une solution candidate (position estimée des nœuds) vers une position minimisant un critère global d'erreur en mettant notamment en jeu :

- Le calcul de vecteurs reliant des couples de nœuds de la solution associée à chaque mesure de ranging,
- L'évaluation d'une mesure de l'erreur entre la distance entre nœuds de la solution et celle mesurée par le dispositif de ranging, par exemple, la différence entre la norme de ces vecteurs et la mesure de ranging associée,

- La seule mémorisation de la position des nœuds issue des étapes du procédé selon l'invention, des coordonnées des ancres mesurées et de leurs incertitudes associées.

Soit un ensemble de N nœuds $M_i$ de positions :

$$\overrightarrow{OM_i} = \begin{vmatrix} x_i \\ y_i \\ z_i \end{vmatrix} \text{ en trois dimensions (3D) et} \qquad \overrightarrow{OM_i} = \begin{vmatrix} x_i \\ y_i \end{vmatrix} \text{ en deux}$$

dimensions (2D), les coordonnées sont choisies dans un repère cartésien, O étant le point origine choisi dans ce repère.

La distance entre deux nœuds $M_i$, $M_j$, $d(M_i,M_j)$, est définie par $d(M_i,M_j)=\|\overrightarrow{M_iM_j}\|$. L'ensemble des positions des N nœuds à un instant donné t, $P_i(t)=\{M_i(t)\}_{i=0..N-1}$ est appelé « géométrie courante ». $r_{ij}$ *est* une mesure de distance (ranging) obtenue entre le nœud $M_i$ et le nœud $M_j$ par un dispositif de mesure dédié (module de ranging situé par exemple au niveau du nœud) et connue avec une incertitude $\sigma_{rij}$, correspondant à un écart type sur la mesure.

On appellera « ancre » ou «mesure d'ancrage » $A_i^k$, une information de position absolue sur la k$^{ième}$ coordonnée du nœud $M_i$, obtenue avec une incertitude $\sigma_{Ai}^k$. Cette information peut être obtenue par des moyens divers tels que des relevés topographiques ou des récepteurs GNSS. L'information sur la position d'une ancre varie en fonction de l'instant de mesure. C'est une fonction délivrée par exemple en temps réel par un dispositif GPS. Par souci de simplification d'écriture, le temps n'est pas indiqué dans l'exposé de l'invention, un homme du métier n'aura pas de difficultés à l'intégrer.

Toutes les coordonnées d'une ancre peuvent être connues a priori, ou en partie seulement, par exemple, lorsque la position du nœud est déterminée par examen d'une carte : si le nœud est situé sur une route, on peut savoir que le nœud est à une latitude donnée sans en connaitre la longitude.

Le procédé selon l'invention repose, notamment, sur un calcul direct des éléments de déplacement de la position des nœuds à chaque itération du procédé, en prenant en compte l'incertitude relative entre mesures de ranging $\sigma_{rij}$ et l'incertitude $\sigma_{Ai}^k$ sur la position d'ancres éventuelles.

Selon une variante de réalisation, et afin de ne pas particulariser le rôle des nœuds associés à une ancre effective et permettre la généralisation du procédé à des ancrages partiels, i.e., au moins une coordonnée du nœud est contrainte par une mesure externe, une ancre virtuelle $A_i$ et un vecteur d'incertitude $\overrightarrow{\sigma_{Ai}}$ sont associés à chaque nœud $M_i$.

L'ancre virtuelle et le vecteur d'incertitude sont définis comme suit par leur coordonnées d'indice k :

- Si une mesure externe $m_i^k$ est supposée connue (mesure directe de coordonnées par un dispositif de géolocalisation tel que, par exemple, un capteur GNSS ou un relevé topographique) sur la coordonnée k du noeud $M_i$ avec l'incertitude $\sigma_{Ai}^k$ (par exemple, l'écart-type de mesure sur $m_i^k$ ), alors la k$^{ième}$ coordonnée de l'ancre $A_i$ est égale à $m_i^k$ et la k$^{ième}$ coordonnée du vecteur d'incertitude $\overrightarrow{\sigma_{Ai}}$ est égale à $\sigma_{Ai}^k$. Cette k$^{ième}$ coordonnée du nœud sera dite « ancrée »;
- Dans le cas contraire, la k$^{ième}$ coordonnée de l'ancre $A_i$ est fixée à une valeur arbitraire (par exemple, 0) et la k$^{ième}$ coordonnée du vecteur incertitude $\overrightarrow{\sigma_{Ai}}$ fixée à une valeur arbitraire négative (par exemple, -1). Cette coordonnée du nœud sera dite « libre ».

A chaque itération du procédé, on calcule pour chaque nœud $M_i$ :

- La somme vectorielle des déplacements de ranging $\vec{\delta}_{\rightarrow i}$ applicables au nœud $M_i$ uniquement dus aux écarts par rapport aux mesures de ranging relatives au nœud $M_i$. Ce déplacement est calculé comme la somme sur l'ensemble des mesures de ranging $R_i$ des déplacements $\vec{\delta}_{j\rightarrow i}$ dus à la mesure de ranging $r_{iy}$ relative entre $M_i$ et $M_j$ et à son incertitude $\sigma_{rij}$ ;

$$\vec{\delta}_{\rightarrow i} = \sum_{j \in R_i} \vec{\delta}_{j\rightarrow i} \qquad \vec{\delta}_{j\rightarrow i} = \varphi\big(\Delta_{ij}, \sigma_{rij}\big)\frac{\overrightarrow{M_jM_i}}{\|\overrightarrow{M_jM_i}\|}$$

Le vecteur qui lie les deux points $M_i$ et $M_j$ est défini comme suit: où avec $\Delta_{ij}$ les coordonnées de $M_jM_i$, $\varphi$ est une fonction de déplacement donnée et $R_i = \{r_{ij}\}$ représente l'ensemble des mesures de ranging disponibles vers $M_i$.

Si tout ou partie des coordonnées de $M_i$ est « ancrée », on calcule un déplacement de rappel vers cette ancre $\vec{\alpha}_{\to i}$ ou correction d'ancrage. Pour limiter l'apparition d'éventuels phénomènes d'oscillation, le calcul de cette correction d'ancrage est effectué sur la position de $M_i$, translatée de la correction de ranging associée.

La correction d'ancrage est $\vec{\alpha}_{\to i} = \Psi(\overrightarrow{A_iM_i} + \vec{\delta}_{\to i}, \vec{\sigma}_{Ai})$, avec $\Psi$ une fonction de déplacement.

Le choix des fonctions de déplacement $\varphi$ et $\Psi$ est libre sous réserve qu'il conduise à un déplacement vers un point d'équilibre ($r_{ij} = \|\overrightarrow{M_jM_i}\|$) pour $\varphi$ et ($\overrightarrow{A_iM_i} = \vec{0}$) pour $\Psi$.

Ces fonctions sont, par exemple, sélectionnées pour refléter un certain degré de connaissance sur les distributions de probabilités associées aux mesures. Des exemples de fonction de déplacement sont donnés ci-après.

Pour des distributions gaussiennes, les déplacements sont proportionnels à une fonction intermédiaire :

$$f(\varepsilon, \sigma) = \begin{vmatrix} 1 - e^{-\frac{\varepsilon^2}{2\sigma^2}}, \text{ si } \sigma > 0 \text{ (coordonnée ancrée)} \\ 1, \text{ si } \sigma = 0 \text{ (coordonnée ancrée fixe)} \\ 0, \text{ si } \sigma < 0 \text{ (coordonnée libre)} \end{vmatrix}$$

où $\varepsilon$ représente l'écart à la position d'équilibre ;

- Si cet écart $\varepsilon$ est faible devant $\sigma$, la probabilité que la mesure soit proche de l'équilibre est élevée : cette fonction sera proche de 0 et le déplacement correctif sera faible,
- Si cet écart $\varepsilon$ est grand devant $\sigma$, la probabilité que la mesure soit proche de l'équilibre est faible : cette fonction sera proche de 1 et le déplacement correctif sera grand.

Sans information particulière sur la loi de probabilité des erreurs, la fonction intermédiaire est définie comme suit :

$$f(\varepsilon, \sigma) = \begin{vmatrix} \beta, \text{où } \beta \in [0,1[, \text{ si } \sigma > 0 \text{ (coordonnée ancrée)} \\ 1, \text{ si } \sigma = 0 \text{ (coordonnée ancrée fixe)} \\ 0, \text{ si } \sigma < 0 \text{ (coordonnée libre)} \end{vmatrix}$$

- Le déplacement correspondra à une fraction constante de l'écart à l'équilibre.

Quelques cas particuliers sont donnés à titre illustratif :

- Si $\sigma = 0$, la coordonnée est parfaitement connue (mesure connue avec une précision infinie, en pratique très inférieure à la précision de positionnement recherchée, comme dans le cas d'un relevé topographique) : le déplacement sera tel qu'il ramène la coordonnée exactement à la valeur de mesure ;
- Si $\sigma < 0$, la coordonnée est libre (artifice de notation indiquant que la coordonnée n'est pas ancrée). Aucun déplacement de rappel n'est appliqué (en pratique, aucun calcul n'est nécessaire pour ces coordonnées). Moyennant la définition de cette fonction intermédiaire, les fonctions $\varphi$ et $\Psi$ peuvent s'écrire :

- 
$$\varphi(\Delta, \sigma) = \mu\Delta \, f(\Delta, \sigma).$$

Le paramètre $\mu$ est un paramètre de convergence strictement compris entre 0 et 0.5. Plus ce paramètre est faible, plus le procédé sera apte à converger en présence d'un grand nombre de nœuds et de positions initiales éloignées de la solution optimale, mais plus la vitesse de convergence sera faible. Selon une variante de réalisation, le paramètre de convergence est pris comme $\mu = 1/N$.

- 
$$\Psi(\vec{\Delta}, \vec{\sigma}) = \begin{vmatrix} -\Delta_1 f(\Delta_1, \sigma_1) \\ -\Delta_2 f(\Delta_2, \sigma_2) \\ -\Delta_3 f(\Delta_3, \sigma_3) \text{ (cas 3D)} \end{vmatrix},$$

fonction de déplacement,

avec $\Delta_1$ la première coordonnée du point Mi et $\sigma_1$ l'incertitude correspondante.

En l'absence de mesures d'ancrages, $\Psi(\vec{\Delta},\vec{\sigma})=0$, le procédé converge alors vers une solution déréférencée, c'est-à-dire une géométrie de nœuds où les positions relatives des nœuds de la solution sont compatibles des mesures de ranging disponibles (i.e. la géométrie réelle peut en être déduite via des opérations de translation, rotation et symétrie d'ensemble).

La recherche d'une solution, i.e. de la position réelle des nœuds, pour un jeu de ranging donné entre N nœuds, est itérative. Elle suppose notamment :

- De créer un ensemble de N points appelés ancres virtuelles $\{A_i\}_{i=0..N-1}$ et de N vecteurs d'incertitudes $\{\vec{\sigma_{Ai}}\}_{i=0..N-1}$ associés à ces ancres ;

Les coordonnées de ces points d'ancrage $A_i$ sont :

- égales à des mesures connues a priori avec une incertitude positive ou nulle (celle-ci est reportée dans la coordonnée correspondante du vecteur $\vec{(\sigma_{Ai})}$. On parlera de coordonnées d'ancrage,
- en l'absence de mesures, la coordonnée correspondante sera inutilisée (valeur arbitraire, par exemple, 0). Cette absence d'information est mémorisée (par exemple, en mettant la valeur négative -1 dans la coordonnée correspondante du vecteur $\vec{\sigma_i}$). On parlera alors de coordonnées libres ;

- De créer un ensemble de N points $\{M_i\}_{i=0..N-1}$ qui contiendront les positions estimées des nœuds du réseau par le procédé ;
- De définir une position « initiale » des points $\{M_i(0)\}_{i=0..N-1}$ qui peut être fixée :

  - de façon arbitraire déterministe,
  - de manière aléatoire, par tirage au sort des valeurs des coordonnées des nœuds,
  - en utilisant les positions estimées résultantes d'une application précédente du procédé,
  - en utilisant la solution de méthodes de résolution sous-optimale telles que la pseudo-linéarisation (PSL),
  - en utilisant des données d'ancrage disponibles pour $A_i$, ces coordonnées sont préférentiellement utilisées pour les coordonnées initiales correspondantes de $M_i$,

- De disposer d'un ensemble E de Q mesures de ranging entre deux nœuds i et j : E=$\{r_{ij}\}_{q\in[0,Q-1]}$ avec $(i,j)\in[0,N-1]^2$ et des incertitudes associées $\{\sigma_{rij}\}_{q\in[0,Q-1]}$;
- De définir des fonctions de déplacement $\varphi$ et $\Psi$.

Le formalisme des ancres virtuelles n'est pas essentiel à la mise en œuvre du procédé selon l'invention, mais en simplifie la description. Il est en effet possible de calculer les corrections d'ancrage en décrivant une boucle de calcul sur les seules coordonnées d'ancrage et leurs incertitudes, ce qui réduit d'autant les calculs et les stockages inutiles pour les coordonnées libres.

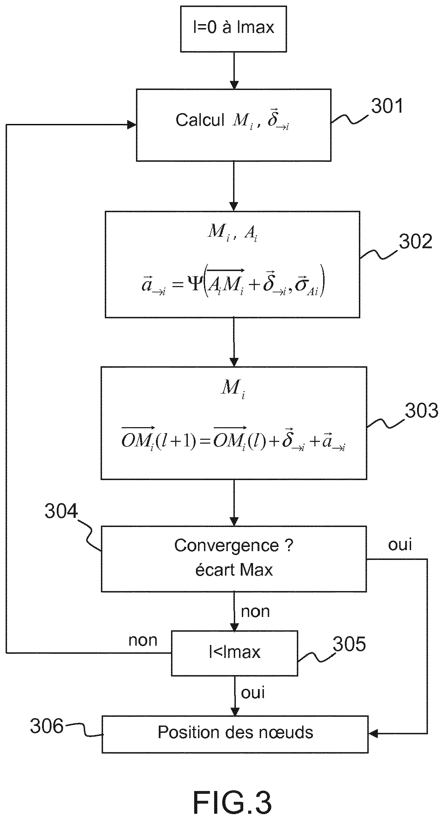

Le procédé comporte par exemple les étapes suivantes, réitérées, et illustrées en figure 3 :
Pour $l$ =0 à $l_{max}$, avec la valeur de $l_{max}$ choisie pour limiter le temps passé en cas d'absence de convergence des étapes;

Etape 1, 301, pour chaque nœud $M_i$, calculer le déplacement de ranging $\vec{\delta}_{\to i} = \sum_{j\in R_i} \vec{\delta}_{j\to i}$ où

$$\vec{\delta}_{j\to i} = \varphi(\Delta_{ij},\sigma_{rij})\frac{\overrightarrow{M_jM_i}}{\|\overrightarrow{M_jM_i}\|}$$

induit sur ce nœud $M_i$ par la totalité des autres nœuds disposant d'une mesure de ranging à partir du nœud $M_i$,

Etape 2, 302, pour chaque nœud $M_i$, possédant une coordonnée d'ancrage dans l'ancre virtuelle associée $A_i$, calculer une correction d'ancrage $\vec{\alpha}_{\to i}$, i.e. déplacement de rappel vers cette ancre, par la formule $\vec{\alpha}_{\to i} =\Psi(\overrightarrow{A_iM_i} + \vec{\delta}_{\to i},\vec{\sigma}_{Ai})$, i.e. déplacement de rappel fonction du vecteur $\overrightarrow{A_iM_i}$ et d'un déplacement de ranging $\vec{\delta}_{\to i}$,

Etape 3, 303, à chaque nœud $M_i$, appliquer un déplacement égal à la somme du déplacement de ranging $\vec{\delta}_{\to i}$ et de la correction d'ancrage $\vec{\alpha}_{\to i}$ précédemment calculés. $\overrightarrow{OM_i}(l+1) = \overrightarrow{OM_i}(l) + \vec{\delta}_{\to i} +\vec{\alpha}_{\to i}$,

Etape 4, 304, calcul $\Delta_{tot}^2 = \sum_{i=0}^{N-1} \Delta_i^2$ où $\Delta_i^2 = \sum_{j \neq i} \Delta_{ij}^2$ = avec $\Delta_{ij} = r_{ij} - d(M_i, M_j)$ où $\Delta$ est interprété comme un terme d'erreur entre estimation de la distance $r_{ij}$ et mesure de distance fournie par les dispositifs de ranging, comparer cette quantité à un critère d'arrêt défini au préalable par un opérateur, par exemple, si $\Delta_{tot}^2 \leq \Delta_{fin}^2$, ou bien max($|\Delta_{ij}|$) <*écartMax*, si ce test est respecté, arrêt des étapes et aller à l'étape 6,

Etape 5, 305, sinon si le critère d'arrêt n'est pas vérifié, on va tester si un nombre maximal d'itération est atteint, Si $l < l_{max}$ alors on itère $l = l + 1$ et on retourne à l'étape 1, sinon aller à l'étape 6,

Etape 6, 306, fin des itérations. A ce stade, les positions des nœuds $M_i$ correspondent à la meilleure estimation de la position réelle obtenue par la mise en œuvre des étapes.

On remarque que si $l = l_{max}$, le procédé n'a pas convergé vers une solution respectant les contraintes d'erreur imposées désirées : ceci indique à l'utilisateur que la position estimée des nœuds peut ne pas être satisfaisante.

Dans ce cas, les quantités $\Delta_{tot}^2$ et max($|\Delta_{ij}|$) fournissent une mesure de cet écart aux objectifs de précisions $\Delta_{fin}^2$ (erreur quadratique totale) et *écartMax* (erreur élémentaire maximale sur un couple de nœuds).

Les figures 4 à 7 schématisent le résultat des étapes du procédé selon l'invention, respectivement, pour la première itération, la dixième itération, la trentième itération et les positions finales où l'incertitude sur la position du point $M_3$ de coordonnées (0, 100) est nettement supérieure à celles des autres points $M_1$, $M_2$ et $M_4$.

Sur ces figures, quatre nœuds sont représentés, $M_1$, $M_2$, $M_3$ et $M_4$ dans un repère cartésien gradué en mètres. Les points $M_1$ et $M_2$ sont ancrés avec une précision élevée (par exemple via un relevé topographique à 10 cm près), le point $M_3$ est ancré mais sa position initiale est incorrectement mesurée avec une erreur de 20 m (par exemple, grâce à un moyen GNSS d'incertitude de 15 m en écart type) et le point $M_4$ n'est pas ancré (pas de moyen local de mesure de position absolue). Tous les nœuds sont équipés d'un dispositif de ranging local permettant de mesurer la distance aux autres nœuds, avec une incertitude de 50 cm en écart type. Ces valeurs ne sont qu'illustratives du procédé.

Les positions réelles des nœuds sont matérialisées par des étoiles, les positions de la solution initiale sont représentées par des ronds et les positions estimées des nœuds par le procédé selon l'invention à l'aide de carrés pour l'itération courante. Les flèches en pointillés ont une longueur égale aux mesures de ranging entre nœuds, et les flèches en traits pleins correspondent aux déplacements appliqués lors des étapes du procédé.

Sur la figure 4 sont représentés le point $M_1$ de position estimée P1, le point $M_2$ de position estimée P2, le point $M_3$ de position estimée P3, ainsi qu'une position relative à la position initiale, le point $M_4$ ayant une position estimée 401, une position 402 correspondant à la solution initiale et une position réelle 403.

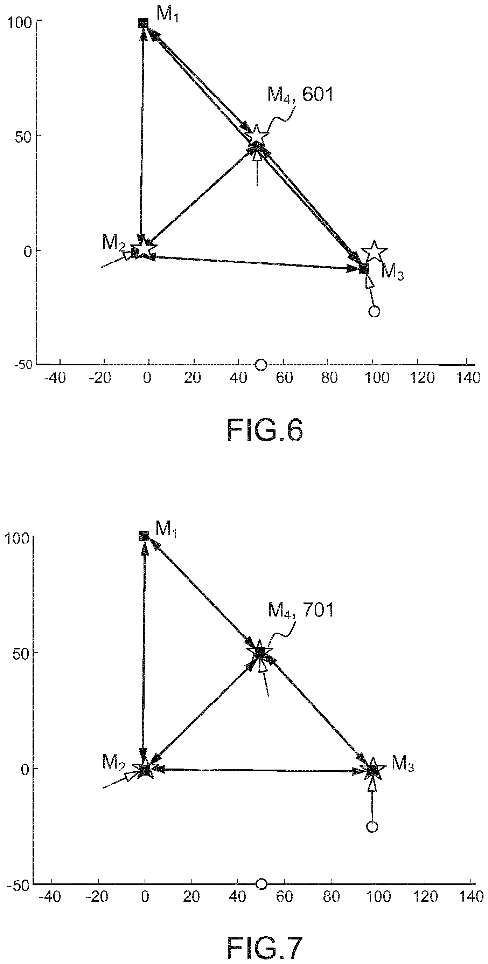

La figure 5 montre qu'après la dixième itération, la position estimée pour le point $M_4$ est déplacé en 501, puis la figure 6, au point 601 après la trentième itération et la figure 7, la fin des étapes au point 701. Cette illustration montre que le point $M_4$, dont aucune coordonnée n'est ancrée, a été déplacé d'itération en itération d'une position d'initialisation éloignée de coordonnées (50,-50) vers la position recherchée de coordonnées (50,50). Dans le même temps, le point $M_3$, bien qu'ancré mais avec une incertitude importante, se voit ramené vers sa position réelle par la mise en œuvre du procédé. Les points $M_1$ et $M_2$ ne bougent quasiment pas, du fait de la grande précision de leur ancrage.

Le procédé selon l'invention permet le calcul d'une solution pour un jeu de mesures de ranging et éventuellement de positions d'ancres données. Il peut être appliqué de nouveau :

- Dès réception de nouvelles mesures de ranging (soit à chaque nouvelle mesure, soit après réception d'un lot de mesures pour réduire les demandes en moyens de calcul) ;
- Dès réception d'un nouveau jeu de contraintes d'ancrage (par exemple, des informations sur les coordonnées de certains nœuds, issues par exemple de récepteurs GNSS, ou de relevés topographiques) ;
- Selon l'application visée, une nouvelle application du procédé peut utiliser, comme solution initiale, la solution calculée précédemment, en particulier si la cinématique des nœuds implique des déplacements limités au regard de la cadence de rafraîchissement des mesures de ranging. La réutilisation d'une solution calculée précédemment comme initialisation d'une nouvelle application du procédé à un instant ultérieur limite les risques de non-convergence et permet de réduire considérablement le nombre d'itérations pour converger vers la nouvelle estimation de la position des nœuds.

Les étapes du procédé selon l'invention s'appliquent par exemple dans un système décentralisé, dans lequel tous les nœuds concernés comportent un processeur adapté à exécuter les étapes, les nœuds échangeant les informations grâce à un moyen de communication.

Le procédé s'applique aussi dans un système centralisé où un nœud du réseau est par exemple désigné nœud central.

Le procédé selon l'invention offre une simplicité des calculs tant en termes de mémoire, que de puissance de calcul. Les seuls calculs nécessaires au fonctionnement du procédé sont la détermination des vecteurs formés par les couples de nœuds du réseau pour lesquels une mesure de ranging est disponible. De plus, l'introduction de contraintes telles que la fixation de tout ou partie de coordonnées d'ancres, associée à l'incertitude sur ces coordonnées, s'exprime très simplement en modifiant, relativement à ces incertitudes, la fonction non linéaire de calcul de déplacement vers une position d'équilibre (cette dernière pouvant être tabulée pour limiter les demandes en ressources de calcul).

**Revendications**

1. Procédé pour déterminer la position d'un ou plusieurs objets susceptibles de se déplacer dans un réseau, un ou plusieurs objets étant doté d'une capacité de mesure de distance aux autres objets du réseau, au moins une partie des coordonnées d'un objet est connue, **caractérisé en ce qu'**il comporte au moins les étapes suivantes :

   • Définir un ensemble de points Ai ou ancres et les incertitudes associées à leurs coordonnées, les coordonnées des ancres et l'incertitude sur les coordonnées décrivant des informations sur la position des objets et l'incertitude sur ces informations,
   • Générer un ensemble contenant les positions estimées des objets et définir une position initiale des points,
   • Mesurer un ensemble de distances entre au moins deux objets Mi, Mj, avec des incertitudes associées et exécuter les étapes suivantes :

   • Etape 1, pour chaque objet $M_i$, calculer un déplacement $\vec{\delta}_{\rightarrow i} = \sum_{j \in R_i} \vec{\delta}_{j \rightarrow i}$ correspondant à la somme vectorielle des déplacements de mesure ou ranging sur l'ensemble de mesures de ranging disponibles vers l'objet $M_i$ et induits sur cet objet $M_i$ par la totalité des autres objets disposant d'une mesure de ranging à partir dudit objet $M_i$, dus à la mesure de ranging $r_{ij}$ relative entre $M_i$ et $M_j$ et à son incertitude $\sigma_{rij}$, avec $R_i$ = $\{r_{ij}\}$ l'ensemble des mesures de ranging disponibles vers $M_i$, et $\vec{\delta}_{\rightarrow i} = \sum_{j \in R_i} \vec{\delta}_{j \rightarrow i}$ où

   $$\vec{\delta}_{j \rightarrow i} = \varphi(\Delta_{ij}, \sigma_{rij}) \frac{\overrightarrow{M_j M_i}}{\|\overrightarrow{M_j M_i}\|}$$

   avec $\Delta_{ij}$ les coordonnées de $M_j M_i$, $\varphi$ est une fonction de déplacement donnée,
   • Etape 2, (302), pour chaque objet $M_i$, possédant une coordonnée d'ancrage dans une ancre virtuelle associée $A_i$, calculer une valeur de déplacement de rappel $\overrightarrow{\alpha}_{\rightarrow i}$ vers cette ancre, avec $\overrightarrow{\alpha}_{\rightarrow i} = \Psi(\overrightarrow{A_i M_i} + \overrightarrow{\delta}_{\rightarrow i}, \overrightarrow{\sigma_{Ai}})$, $\Psi$ une fonction de déplacement,
   • Etape 3, (303), à chaque objet $M_i$ appliquer un déplacement égal à la somme du déplacement de ranging $\vec{\delta}_{\rightarrow i}$ et de la correction d'ancrage $\overrightarrow{\alpha}_{\rightarrow i}$ précédemment calculés,
   • Etape 4, (304), calculer le carré du terme d'erreur $\Delta_{tot}^2 = \sum_{i=0}^{N-1} \Delta_i^2$ où $\Delta_i^2 = \sum_{j \neq i} \Delta_{ij}^2$ avec $\Delta_{ij} = r_{ij} - d(M_i, M_j)$, $\Delta$ est un terme d'erreur entre une estimation de la distance $d(M_i, M_j)$ après déplacement de l'objet à l'étape 3 et la mesure de distance $r_{ij}$ fournie par des dispositifs de ranging sur l'ensemble des nœuds, comparer cette quantité à un critère d'arrêt défini au préalable par un opérateur si $\Delta_{tot}^2 \leq \Delta_{fin}^2$, ou bien max($|\Delta_{ij}|$) < *écartMax*,
   si ce test est respecté, aller à l'étape 6,
   • Sinon, Etape 5, (305), tester si un nombre maximal d'itérations est atteint,
   Si $I < I_{max}$ alors itérer $I = I + 1$ et aller à l'étape 1, sinon aller à l'étape 6,
   • Etape 6, (306), fin des itérations, définir la position des objets correspondant à la meilleure estimation de la position réelle des objets obtenue pour chaque objet.

2. Procédé selon la revendication 1 **caractérisé en ce que** l'on définit une ancre et son vecteur d'incertitude de la manière suivante :

• Si une mesure externe $m_i^k$ est supposée connue sur la coordonnée k de l'objet $M_i$ avec une incertitude $\sigma_{Ai}^k$,

alors la $k^{ième}$ coordonnée de l'ancre $A_i$ est égale à $m_i^k$ et la $k^{ième}$ coordonnée du vecteur d'incertitude $\overrightarrow{\sigma_{Ai}}$ est

égale à $\sigma_{Ai}^k$,

• Dans le cas contraire, la $k^{ième}$ coordonnée de l'ancre $A_i$ est fixée à une valeur arbitraire et la $k^{ième}$ coordonnée du vecteur incertitude $\overrightarrow{\sigma_{Ai}}$ fixée à une valeur arbitraire négative.

**3.** Procédé selon l'une des revendications 1 ou 2 **caractérisé en ce que** l'on utilise une fonction de déplacement proportionnelle à une fonction intermédiaire définie de la manière suivante :

$$f(\varepsilon,\sigma) = \left| \begin{array}{l} 1 - e^{-\frac{\varepsilon^2}{2\sigma^2}}, \text{si } \sigma > 0 \text{ (coordonnée ancrée)} \\ 1, \text{ si } \sigma = 0 \text{ (coordonnée ancrée fixe)} \\ 0, \text{ si } \sigma < 0 \text{ (coordonnée libre)} \end{array} \right.$$

où $\varepsilon$ représente l'écart à la position d'équilibre.

**4.** Procédé selon l'une des revendications 1 ou 2 **caractérisé en ce que** l'on utilise une fonction de déplacement proportionnelle à une fonction intermédiaire définie de la manière suivante :

$$f(\varepsilon,\sigma) = \left| \begin{array}{l} \beta, \text{où } \beta \in [0,1[, \text{si } \sigma > 0 \text{ (coordonnée ancrée)} \\ 1, \text{ si } \sigma = 0 \text{ (coordonnée ancrée fixe)} \\ 0, \text{ si } \sigma < 0 \text{ (coordonnée libre)} \end{array} \right.$$

**5.** Procédé selon l'une des revendications 3 ou 4 **caractérisé en ce que** l'on tient compte dans une fonction de déplacement d'un paramètre de convergence compris entre 0 et 0.5 comme coefficient.

**6.** Procédé selon l'une des revendications précédentes **caractérisé en ce que** les coordonnées des ancres $A_i$ sont définis de la manière suivante :

- égales à des mesures connues a priori avec une incertitude positive ou nulle (celle-ci est reportée dans la coordonnée correspondante du vecteur $\overrightarrow{\sigma_{Ai}}$), les coordonnées sont des coordonnées d'ancrage,
- en l'absence de mesures, la coordonnée correspondante sera inutilisée, les coordonnées sont libres.

**7.** Procédé selon l'une des revendications précédentes **caractérisé en ce que** l'on définit une position initiale des points $\{M_i(0)\}_{i=0..N-1}$ de la manière suivante :

- de façon arbitraire déterministe,
- de manière aléatoire, par tirage au sort des valeurs des coordonnées des nœuds,
- en utilisant les positions estimées résultantes d'une application précédente du procédé,
- en utilisant la solution de méthodes de résolution sous-optimale telles que la pseudo-linéarisation (PSL),
- en utilisant des données d'ancrage disponibles pour $A_i$, ces coordonnées sont préférentiellement utilisées pour les coordonnées initiales correspondantes de $M_i$.

**8.** Procédé selon l'une des revendications précédentes **caractérisé en ce qu'**un objet est désigné comme maître et **en ce que** ledit objet est adapté à exécuter les étapes du procédé selon l'une des revendications 1 à 7 et à centraliser les résultats.

**9.** Procédé selon l'une des revendications précédentes **caractérisé en ce que** chaque objet du réseau est adapté à exécuter les étapes du procédé selon l'une des revendications 1 à 7 et à centraliser les résultats.

10. Procédé selon l'une des revendications précédentes **caractérisé en ce que** l'objet dont la position est recherchée est un nœud dans un réseau de communication.

11. Dispositif permettant de déterminer la position d'un ou plusieurs objets susceptibles de se déplacer dans un réseau, un ou plusieurs objets étant doté d'un dispositif de mesures de distance inter-nœuds (21), les nœuds communiquant entre eux grâce à un moyen de communication (10), **caractérisé en ce qu'**il comporte au moins un processeur (12) adapté à exécuter les étapes du procédé selon l'une des revendications 1 à 10, un dispositif de mesure (11, 20) de la position des nœuds.

**Patentansprüche**

1. Verfahren zum Bestimmen der Position eines oder mehrerer Objekte, welche(s) sich in einem Netzwerk bewegen kann/können, wobei ein oder mehrere Objekte mit einer Kapazität zum Messen eines Abstandes zu anderen Objekten des Netzwerk ausgestattet ist/sind, wobei mindestens ein Teil der Koordinaten eines Objekts bekannt ist, **dadurch gekennzeichnet, dass** es mindestens folgende Schritte beinhaltet:

• Definieren einer Gruppe von Punkten Ai oder Ankern und der ihren Koordinaten zugeordneten Ungewissheiten, wobei die Koordinaten der Anker und die Ungewissheit in Bezug auf die Koordinaten Informationen zur Position der Objekte und die Ungewissheit in Bezug auf diese Informationen beschreiben,
• Erzeugen einer Gruppe, welche die geschätzten Positionen der Objekte enthält und Definieren einer Anfangsposition der Punkte,
• Messen einer Gruppe von Abständen zwischen mindestens zwei Objekten Mi, Mj, mit zugeordneten Ungewissheiten und Ausführen folgender Schritte:

• Schritt 1, für jedes Objekt $M_i$, Berechnen einer Verschiebung $\vec{\delta}_{\rightarrow i} = \sum_{j \in R_i} \vec{\delta}_{j \rightarrow i}$ , welche der Vektorsumme der Mess- oder Ranging-Verschiebungen über sämtliche verfügbaren Ranging-Messungen in Richtung des Objekts $M_i$ entspricht, und welche für dieses Objekt $M_i$ durch die Gesamtheit der anderen Objekte induziert werden, welche über eine Ranging-Messung ab dem Objekt $M_i$ verfügen, aufgrund der relativen Ranging-Messung $r_{ij}$ zwischen $M_i$ und $M_j$ und aufgrund ihrer Ungewissheit $\sigma_{rij}$,
wobei $R_i = \{r_{ij}\}$ die Gruppe der verfügbaren Ranging-Messungen in Richtung $M_i$ ist,

$$\vec{\delta}_{\rightarrow i} = \sum_{j \in R_i} \vec{\delta}_{j \rightarrow i} , \qquad \vec{\delta}_{j \rightarrow i} = \varphi(\Delta_{ij}, \sigma_{rij}) \frac{\overrightarrow{M_j M_i}}{\left\| \overrightarrow{M_j M_i} \right\|} ,$$

und wobei wobei $\Delta_{ij}$ die Koordinaten von $M_j$, $M_i$, sind, wobei $\varphi$ eine gegebene Verschiebungsfunktion ist,
• Schritt 2, (302), für jedes Objekt $M_i$, welches eine Verankerungskoordinate in einem zugehörigen virtuellen Anker $A_i$ besitzt,
Berechnen eines Rückholverschiebewertes $\overrightarrow{\alpha}_{\rightarrow i}$ in Richtung dieses Ankers,
wobei $\overrightarrow{\alpha}_{\rightarrow i} = \Psi(\overrightarrow{A_i M_i} + \overrightarrow{\delta}_{\rightarrow i}, \overrightarrow{\sigma_{Ai}})$ eine Verschiebungsfunktion ist,
• Schritt 3, (303), auf jedes Objekt $M_i$, Anwenden einer Verschiebung gleich der Summe der zuvor berechneten Ranging-Verschiebung $\vec{\delta}_{\rightarrow i}$ und der zuvor berechneten Verankerungskorrektur $\vec{a}_{\rightarrow i}$,

$$\Delta^2_{tot} = \sum_{i=0}^{N-1} \Delta^2_i , \qquad \Delta^2_i = \sum_{j \neq i} \Delta^2_{ij} ,$$

• Schritt 4, (304), Berechnen des Quadrates des Fehlerterms wobei wobei $\Delta_{ij} = r_{ij}$-d$(M_i, M_j)$, $\Delta$ ein Fehlerterm zwischen einer Schätzung des Abstandes d(Mi, Mj) nach Verschieben des Objekts in Schritt 3 und der Messung des Abstandes $r_{ij}$ ist, welche durch Ranging-Vorrichtungen an sämtlichen Knoten bereitgestellt wird, Vergleichen dieser Menge mit einem zuvor durch einen Operator definierten Stoppkriterium wenn $\Delta^2_{tot} \leq \Delta^2_{fin}$ , oder wenn max($|\Delta_{ij}|$) < *ecartMax* (maximale Abweichung),
ist dieser Test erfüllt, Weitergehen zu Schritt 6,
• Ansonsten, Schritt 5, (305), Testen, ob eine maximale Anzahl von Iterationen erreicht ist, wenn $I < I_{max}$, dann Durchführen der Iteration $I = I + 1=$ und Weitergehen zu Schritt 1, ansonsten Weitergehen zu Schritt 6,
• Schritt 6, (306), Ende der Iterationen, Definieren der Position der Objekte, welche der besten Schätzung der Ist-Position der Objekte entspricht, welche für jedes Objekt erzielt wird.

2. Verfahren nach Anspruch 1, **dadurch gekennzeichnet, dass** man einen Anker und seinen Ungewissheitsvektor wie folgt definiert:

- Wenn eine externe Messung $m_i^k$ an der Koordinate k des Objekts $M_i$ mit einer Ungewissheit $\sigma_{Ai}^k$ als bekannt angenommen wird, dann ist die k. Koordinate des Ankers $A_i$ gleich $m_i^k$ und die k. Koordinate des Ungewissheitsvektors ist gleich $\vec{\sigma}_{Ai}$,
- Im gegenteiligen Falle wird die k. Koordinate des Ankers $A_i$ auf einen willkürlichen Wert festgelegt und die k. Koordinate des Ungewissheitsvektors $\vec{\sigma}_{Ai}$ wird auf einen willkürlichen negativen Wert festgelegt.

3. Verfahren nach einem der Ansprüche 1 oder 2, **dadurch gekennzeichnet, dass** man eine Verschiebungsfunktion verwendet, welche proportional zu einer wie folgt definierten Zwischenfunktion ist:

$$f(\varepsilon, \sigma) = \left| \begin{array}{l} 1 - e^{-\frac{\varepsilon^2}{2\sigma^2}} \text{ wenn } \sigma > \text{(verankerte Koordinate)} \\ 1, \text{ wenn } \sigma > 0 \text{ (feste verankerte Koordinate)} \\ 0, \text{ wenn } \sigma < 0 \text{ (freie Koordinate)} \end{array} \right.$$

wobei ε die Abweichung zur Gleichgewichtsposition darstellt.

4. Verfahren nach einem der Ansprüche 1 oder 2, **dadurch gekennzeichnet, dass** man eine Verschiebungsfunktion verwendet, welche proportional zu einer wie folgt definierten Zwischenfunktion ist:

$$f(\varepsilon, \sigma) = \left| \begin{array}{l} \beta, \text{ wobei } \beta \in [0,1[ \text{ wenn } \sigma > \text{(verankerte Koordinate)} \\ 1, \text{ wenn } \sigma > 0 \text{ (feste verankerte Koordinate)} \\ 0, \text{ wenn } \sigma < 0 \text{ (freie Koordinate)} \end{array} \right.$$

5. Verfahren nach einem der Ansprüche 3 oder 4, **dadurch gekennzeichnet, dass** man in einer Verschiebungsfunktion als Koeffizienten einen Konvergenzparameter zwischen 0 und 0,5 berücksichtigt.

6. Verfahren nach einem der vorhergehenden Ansprüche, **dadurch gekennzeichnet, dass** die Koordinaten der Anker $A_i$, wie folgt definiert sind:

- gleich den im Voraus bekannten Messungen mit einer positiven Ungewissheit oder einer Ungewissheit gleich null (diese wird auf die entsprechende Koordinate des Vektors $\vec{\sigma}_{Ai}$ übertragen), wobei die Koordinaten Verankerungskoordinaten sind,
- in Ermangelung von Messungen wird die entsprechende Koordinate nicht genutzt, die Koordinaten sind frei.

7. Verfahren nach einem der vorhergehenden Ansprüche, **dadurch gekennzeichnet, dass** man eine Anfangsposition der Punkte $\{M_i(0)\}_{i=0..N-1}$ wie folgt definiert:

- auf willkürlich deterministische Weise,
- auf willkürliche Weise, durch Verlosen der Werte der Koordinaten der Knoten,
- unter Verwendung der geschätzten Positionen, welche aus einer vorherigen Anwendung des Verfahrens resultieren,
- unter Verwendung der Lösung von suboptimalen Lösungsverfahren wie der Pseudo-Linearisierung (PSL),
- unter Verwendung der verfügbaren Verankerungsdaten für $A_i$, wobei diese Koordinaten vorzugsweise für die entsprechenden Anfangskoordinaten von $M_i$ verwendet werden.

8. Verfahren nach einem der vorhergehenden Ansprüche, **dadurch gekennzeichnet, dass** ein Objekt als Master bezeichnet wird und dass das Objekt geeignet ist, die Schritte des Verfahrens nach einem der Ansprüche 1 bis 7 auszuführen und die Ergebnisse zu zentralisieren.

9. Verfahren nach einem der vorhergehenden Ansprüche, **dadurch gekennzeichnet, dass** jedes Objekt des Netzwerks geeignet ist, um die Schritte des Verfahrens nach einem der Ansprüche 1 bis 7 auszuführen und die Ergebnisse zu zentralisieren.

10. Verfahren nach einem der vorhergehenden Ansprüche, **dadurch gekennzeichnet, dass** das Objekt, dessen Position gesucht wird, ein Knoten in einem Kommunikationsnetzwerk ist.

11. Vorrichtung zum Bestimmen der Position eines oder mehrerer Objekte, welche(s) sich in einem Netzwerk bewegen kann/können, wobei ein oder mehrere Objekte mit einer Vorrichtung zur Messung des Abstandes zwischen Knoten (21) versehen ist/sind, wobei die Knoten miteinander dank einem Kommunikationsmittel (10) kommunizieren, **dadurch gekennzeichnet, dass** sie mindestens einen Prozessor (12), welcher geeignet ist, die Schritte des Verfahrens nach einem der Ansprüche 1 bis 10 auszuführen, und eine Vorrichtung zur Messung (11, 20) der Position der Knoten beinhaltet.

**Claims**

1. Method for determining the position of one or more objects capable of moving in a network, one or more objects being provided with an ability to measure distance from the other objects of the network, at least some of the coordinates of an object are known, **characterised in that** it comprises at least the following steps:

   • defining a set of points Ai or anchors and the uncertainties associated with their coordinates, the coordinates of the anchors and the uncertainty concerning the coordinates describing information about the position of the objects and the uncertainty as to this information,
   • generating a set containing the estimated positions of the objects and defining an initial position of the points,
   • measuring a set of distances between at least two objects Mi, Mj, with associated uncertainties, and executing the following steps:

   • step 1, for each object $M_i$, calculating a displacement $\vec{\delta}_{\to i} = \sum_{j \in R_i} \vec{\delta}_{j \to i}$ corresponding to the vector sum of the ranging or measurement displacements over the set of available ranging measurements towards the object $M_i$ and induced on this object $M_i$ by all of the other objects having a ranging measurement from said object $M_i$, as a result of the relative ranging measurement $r_{ij}$ between $M_i$ and $M_j$ and its uncertainty $\sigma_{rij}$, with $R_i = \{r_{ij}\}$ all of the available ranging measurements towards $M_i$, and

   $$\vec{\delta}_{\to i} = \sum_{j \in R_i} \vec{\delta}_{j \to i} \quad \text{where} \quad \vec{\delta}_{j \to i} = \varphi(\Delta_{ij}, \sigma_{rij}) \frac{\overrightarrow{M_j M_i}}{\left\| \overrightarrow{M_j M_i} \right\|}$$ with $\Delta_{ij}$ being the coordinates of $M_j M_i$, $\varphi$ is a given displacement function,
   • step 2, (302), for each object $M_i$, having an anchoring coordinate in an associated virtual anchor $A_i$, calculating a return displacement value $\vec{\alpha}_{\to i}$ to this anchor, with $\vec{\alpha}_{\to i} = \Psi(\overrightarrow{A_i M_i} + \vec{\delta}_{\to i}, \vec{\sigma}_{Ai})$, $\Psi$ being a displacement function,
   • step 3, (303), applying, to each object $M_i$, a displacement equal to the sum of the ranging displacement $\vec{\delta}_{\to i}$ and the anchoring correction $\vec{\alpha}_{\to i}$ which were calculated previously,

   • step 4, (304), calculating the square of the error term $$\Delta_{tot}^2 = \sum_{i=0}^{N-1} \Delta_i^2 \quad \text{where} \quad \Delta_i^2 = \sum_{j \neq i} \Delta_{ij}^2$$ with $\Delta_{ij} = r_{ij} - d(M_i, M_j)$, $\Delta$ is an error term between an estimation of the distance d(Mi, Mj) after displacement of the object in step 3 and the distance measurement $r_{ij}$ provided by ranging devices on all of the nodes, comparing this quantity with a stopping criterion defined beforehand by an operator if $$\Delta_{tot}^2 \leq \hat{\Delta}_{fin}^2,$$ or else max($|\Delta_{ij}|$) < *Maxdeviation*, if this test is met, going to step 6,

• if not, step 5 (305), testing whether a maximum number of iterations has been reached, if $I < I_{max}$ then iterating $I = I + 1$ and going to step 1, if not going to step 6,
• step 6, (306), end of the iterations, defining the position of the objects corresponding to the best estimation of the actual position of the objects obtained for each object.

**2.** Method according to claim 1, **characterised in that** an anchor and its uncertainty vector are defined as follows:

• if an external measurement $m_i^k$ is assumed to be known on the coordinate k of the object $M_i$ with an uncertainty $\sigma_{Ai}^k$, then the k$^{th}$ coordinate of the anchor $A_i$ is equal to $m_i^k$ and the k$^{th}$ coordinate of the uncertainty vector $\overrightarrow{\sigma_{Ai}}$ is equal to $\sigma_{Ai}^k$,

• in the opposite case, the k$^{th}$ coordinate of the anchor $A_i$ is set to an arbitrary value and the k$^{th}$ coordinate of the uncertainty vector $\overrightarrow{\sigma_{Ai}}$ is set to a negative arbitrary value.

**3.** Method according to either claim 1 or claim 2, **characterised in that** a displacement function proportional to an intermediate function defined as follows is used:

$$f(\varepsilon, \sigma) = \begin{vmatrix} 1 - e^{-\frac{\varepsilon^2}{2\sigma^2}}, \text{ if } \sigma > 0 \text{ (anchored coordinate)} \\ 1, \text{ if } \sigma = 0 \text{ (fixed anchored coordinate)} \\ 0, \text{ if } \sigma < 0 \text{ (free coordinate)} \end{vmatrix}$$

where $\varepsilon$ represents the deviation from the equilibrium position.

**4.** Method according to either claim 1 or claim 2, **characterised in that** a displacement function proportional to an intermediate function defined as follows is used:

$$f(\varepsilon, \sigma) = \begin{vmatrix} \beta, \text{where } \beta \in [0,1[, \text{ if } \sigma > 0 \text{ (anchored coordinate)} \\ 1, \text{ if } \sigma = 0 \text{ (fixed anchored coordinate)} \\ 0, \text{ if } \sigma < 0 \text{ (free coordinate)} \end{vmatrix}$$

**5.** Method according to either claim 3 or claim 4, **characterised in that** there is taken into account, in a displacement function, a convergence parameter between 0 and 0.5 as a coefficient.

**6.** Method according to any one of the preceding claims, **characterised in that** the coordinates of the anchors $A_i$ are defined as follows:

• equal to measurements known a priori with a positive or zero uncertainty (this is reflected in the corresponding coordinate of the vector $\overrightarrow{\sigma_{Ai}}$), the coordinates are anchoring coordinates,
• in the absence of measurements, the corresponding coordinate will be unused, and the coordinates are free.

**7.** Method according to any one of the preceding claims, **characterised in that** an initial position of the points $\{M_i(0)\}_{i=0..N-1}$ is defined as follows:

• arbitrarily, deterministically,
• randomly, by randomly drawing values of the coordinates of the nodes,
• by using the estimated positions resulting from a previous application of the method,
• by using the suboptimal resolution method solution, such as pseudo-linearisation (PSL),
• by using anchoring data available for $A_i$, these coordinates are preferably used for the corresponding initial coordinates of $M_i$.

**8.** Method according to any one of the preceding claims, **characterised in that** an object is designated as master and **in that** said object is suitable for executing the steps of the method according to any one of claims 1 to 7 and for centralising the results.

9.  Method according to any one of the preceding claims, **characterised in that** each object of the network is suitable for executing the steps of the method according to any one of claims 1 to 7 and for centralising the results.

10. Method according to any one of the preceding claims, **characterised in that** the object whose position is sought is a node in a communication network.

11. Device allowing establishment of the position of one or more objects capable of moving in a network, one or more objects being provided with an inter-node distance measurement device (21), the nodes communicating with one another by way of a communication means (10), **characterised in that** it includes at least one processor (12) suitable for executing the steps of the method according to any one of claims 1 to 10, and a device (11, 20) for measuring the position of the nodes.

FIG.1

FIG.2

FIG.3

FIG.4

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **WANG, YUE.** *Anchor-Based Three-Dimensional Localization Using Range Measurements*
- **WENDEBERG JOHANNES et al.** Calibration-Free TDOA Self-Localization. *Journal of Location Based Services,* Mai 2013
- **WU, XIAOPING.** *Effective error control of iterative localization for wireless sensor networks*